# EUROPÄISCHE PATENTANMELDUNG

(11) **EP 4 803 378 A2**
(43) Veröffentlichungstag der Anmeldung: **09.09.2026**
(21) Anmeldenummer: 26194021.7
(22) Anmeldetag: 19.07.2019
(51) Int. Cl.: B60R 11/02

(54) **ANZEIGEEINRICHTUNG UND FAHRZEUG**

(30) Priorität: 27.07.2018 DE 102018212600
(62) Dokumentnummer(n) der früheren Anmeldung(en) nach Art. 76 EPÜ: 19749248.1 / 3 829 930
(71) Anmelder: Bayerische Motoren Werke Aktiengesellschaft, 80809 München (DE)
(72) Erfinder: Unger, Martin, 10249 Berlin (DE); Huf, Andreas, 86356 Neusäß (DE); Lathwesen, Harald, 85419 Mauern (DE)

(57) **Zusammenfassung**

Die Erfindung betrifft eine Anzeigeeinrichtung (10) für den Innenraum (3) eines Fahrzeugs (1), welche ausgebildet ist mit einer Anzeigeeinheit (20), welche zum optischen Anzeigen von Information eingerichtet ist, und mit einer Schwenkeinheit (60), welche eingerichtet ist, die Anzeigeeinheit (20), insbesondere steuerbar, zwischen einer Nichtgebrauchsstellung (N), parallel zu einem Dachhimmel (5) des Fahrzeugs (1), und einer Gebrauchsstellung (G), insbesondere abgeschwenkt vom Dachhimmel (5) des Fahrzeugs (1), um eine Schwenkachse (61) zu verschwenken und, insbesondere steuerbar, in der Nichtgebrauchsstellung (N) und/oder der Gebrauchsstellung (G) zu haltern. Die Schwenkeinheit (60) weist zwei Paare miteinander gekoppelter erster und zweiter Hebel (53, 54) auf, deren erste Enden (53-1, 54-1) - für ein Verschwenken der Hebel (43, 54) eines Paares gegeneinander und um deren erste Enden (53-1, 54-1) - um jeweilige Schwenkachsen (53-5, 54-5) schwenkbar miteinander verbunden und mittelbar oder unmittelbar an der Anzeigeeinheit (20) angebracht sind und deren zweite Enden (53-2, 54-2) mittelbar oder unmittelbar am Dachhimmel (5) des Fahrzeugs (1) anbringbar oder angebracht sind.

## Beschreibung

Die vorliegende Erfindung betrifft eine Anzeigeeinrichtung für den Innenraum eines Fahrzeugs sowie ein Fahrzeug als solches.

Es ist bekannt, in einem Fahrzeug und insbesondere in einem allgemeinen Kraftfahrzeug oder Personenkraftwagen eine Anzeigeeinrichtung zum optischen Anzeigen von Information einem Sitzplatz zugeordnet an der Innenseite des Fahrzeugdachs, zum Beispiel am Himmel, zu montieren. Es ist auch bekannt, derartige Anzeigeeinrichtungen im Fondbereich eines Fahrzeugs in eine Rückseite eines Fahrersitzes oder eines Beifahrersitzes, zum Beispiel im Bereich der Kopfstütze, zu integrieren.

Einerseits sind derartige bekannte Anzeigeeinrichtungen von vergleichsweise geringer räumlicher Ausdehnung, wobei dies auch dem Umstand geschuldet ist, dass mit größeren Anzeigen verbundene Massen, insbesondere bei der Dachinnenmontage, nicht in zuverlässiger Weise gehandhabt werden können. Andererseits können Sicherheitsaspekte bisher nicht in ausreichendem Maß berücksichtigt werden.

Der Erfindung liegt die Aufgabe zu Grunde, eine Anzeigeeinrichtung für den Innenraum eines Fahrzeugs sowie ein Fahrzeug als solches zu schaffen, bei welchen mit einfachen Mitteln eine zuverlässige, stabile und leichte Handhabung auch größerer und schwererer Anzeigeeinheiten möglich ist und Sicherheitsaspekte, zum Beispiel im Zusammenhang mit Unfällen, besser berücksichtigt werden können.

Die der Erfindung zu Grunde liegende Aufgabe wird bei einer Anzeigeeinrichtung erfindungsgemäß mit den Merkmalen des Anspruchs 1 und bei einem Fahrzeug erfindungsgemäß mit den Merkmalen des Anspruchs 14 gelöst. Vorteilhafte Weiterbildungen sind jeweils Gegenstand der abhängigen Ansprüche.

Gemäß einem ersten Aspekt der vorliegenden Erfindung wird eine Anzeigeeinrichtung für den Innenraum eines Fahrzeugs und insbesondere eines Kraftfahrzeugs oder Personenkraftwagens geschaffen, mit einer Anzeigeeinheit, welche zum optischen Anzeigen von Information eingerichtet ist, und mit einer Schwenkeinheit, welche eingerichtet ist, die Anzeigeeinheit, insbesondere steuerbar, zwischen einer Nichtgebrauchsstellung, parallel zu einem Dachhimmel des Fahrzeugs, und einer Gebrauchsstellung, insbesondere abgeschwenkt vom Dachhimmel des Fahrzeugs, um eine Schwenkachse zu verschwenken und, insbesondere steuerbar, in der Nichtgebrauchsstellung und/oder der Gebrauchsstellung zu haltern. Erfindungsgemäß weist die Schwenkeinheit zwei Paare miteinander gekoppelter erster und zweiter Hebel auf, deren erste Enden - für ein Verschwenken der Hebel eines Paares gegeneinander und um deren erste Enden - um jeweilige Schwenkachsen schwenkbar miteinander verbunden und mittelbar oder unmittelbar an der Anzeigeeinheit angebracht sind. Die zweiten Enden der Hebel sind mittelbar oder unmittelbar am Dachhimmel des Fahrzeugs anbringbar oder angebracht.

Durch diese Maßnahmen und insbesondere durch das Zusammenwirken der Hebel der Hebelpaare ergibt sich die Möglichkeit, auf Grund ihrer höheren Masse bisher schwer zu handhabende Anzeigeeinrichtungen mit größerer und damit schwerer Anzeigeeinheit auf einfache Weise, stabil und zuverlässig im Innenraum eines Fahrzeugs zu handhaben, wobei auch Sicherheitsaspekte, zum Beispiel während eines Unfalls, besser berücksichtigt werden können, indem zum Beispiel die Trägheit der Anzeigeeinrichtung im Zusammenhang mit den Bewegungsmöglichkeiten auf Grund der Hebelpaare für ein passives und von der Trägheit getriebenes Ausweichen der Anzeigeeinheit aus dem Fahrgastraum genutzt werden kann.

Ein erstes Ende eines jeweiligen ersten Hebels eines Paares von Hebeln kann als Schwenkhebel drehfest an der Anzeigeeinheit angebracht und mit dieser verbunden sein. Die Schwenkhebel dienen insbesondere dazu, die Anzeigeeinheit bei der eigentlichen Schwenkbewegung zu tragen und zu führen.

Dabei ergibt sich eine besonders platzsparende Anordnung, wenn der Schwenkhebel beispielsweise an oder in einem Kreuzungsbereich einer Querkante und einer Längskante der Anzeigeeinheit angebracht ist, welcher in einem im Fahrzeug montierten Zustand der Anzeigeeinrichtung und/oder in der Nichtgebrauchsstellung dem Fond des Fahrzeugs zugewandt ist.

Um eine Schwenkbewegung in besonders stabiler Form zu erhalten, ist es bei einer anderen Ausführungsform der erfindungsgemäßen Anzeigeeinrichtung vorgesehen, dass ein erstes Ende eines jeweiligen zweiten Hebels eines Paares als Koppelhebel drehbar an der Anzeigeeinheit und mit dieser und mit dem ersten Ende eines zugeordneten ersten Hebels des Paares verbunden angebracht ist. Durch diese Maßnahmen ergibt sich insbesondere eine stabilisierte Seitenführung beim Verschwenken.

Eine weitere Stabilisierung der Verschwenkbewegung lässt sich erreichen, wenn gemäß einer anderen Ausgestaltungsform der erfindungsgemäßen Anzeigeeinrichtung ein zweites Ende eines jeweiligen ersten Hebels eines Paares und/oder ein zweites Ende eines jeweiligen zweiten Hebels eines Paares jeweils um eine jeweilige Schwenkachse schwenkbar ausgebildet sind.

Dabei ist es von besonderem Vorteil, wenn diese schwenkbare Anbringung zur Stabilisierung über einen jeweiligen festen oder drehbar am jeweiligen zweiten Ende gelagerten Bolzen oder Zapfen erfolgt, zum Beispiel mit zueinander parallel ausgerichteten Schwenkachsen, mit parallel zu den Schwenkachsen der ersten Enden der Hebel, mit parallel zur Schwenkachse der Anzeigeeinheit und/oder parallel zu den Querkanten der Anzeigeeinheit ausgerichteten Schwenkachsen.

Das hohe Maß an Parallelität der unterschiedlichen Schwenkachsen, wobei auch verschiedene Schwenkachsen miteinander zusammenfallen können, erhöht weiter die seitliche Stabilität bei der Verschwenkbewegung und verhindert zum Beispiel ein Ausweichen in Bewegungsformen, die aus der Schwenkebene hinausführen.

Die Schwenkachse am zweiten Ende eines jeweiligen ersten Hebels kann mit der Schwenkachse der Anzeigeeinheit zusammenfallen. Jedoch sind auch andere Konfigurationen denkbar.

Bei einem anderen Ausführungsbeispiel der erfindungsgemäßen Anzeigeeinrichtung weist ein jeweiliger zweiter Hebel eine Längserstreckungsrichtung sowie ein in der Längserstreckungsrichtung ausgerichtetes Langloch zur Aufnahme eines dem zweiten Ende des Hebels zugeordneten Bolzens auf. Dabei ist der Bolzen im Langloch entlang der Haupterstreckungsrichtung verschiebbar und um eine die dem zweiten Ende des zweiten Hebels zugeordnete Schwenkachse definierende Bolzenachse, insbesondere senkrecht zur Haupterstreckungsrichtung, drehbar ist.

Durch diese Maßnahmen lassen sich komplexere Bewegungsformen beim Verschwenken der ersten und zweiten Hebel gegeneinander realisieren. Das Langloch kann dabei als Kulissenführung - insbesondere für den jeweils vorgesehenen Bolzen - dienen. Auch lässt sich durch die Wahl des Langlochs in Dimension und Länge mit den entsprechenden Anschlägen am Ende des Langlochs die Bewegung des Verschwenkens zueinander begrenzen.

Bei einer anderen alternativen Ausgestaltungsform der erfindungsgemäßen Anzeigeeinrichtung ist ein jeweiliger zweiter Hebel mit seinem ersten Ende an einer zumindest die Schwenkachse zum ersten Ende des zweiten Hebels definierende Welle drehfest angebracht.

Die entsprechende Montage dieses Endes kann zum Beispiel an einem Ende der Welle erfolgen. Dabei ist es auch denkbar, beide Enden der Welle mit einander kombiniert einzusetzen, zum Beispiel indem durch die beiden Enden der Welle die beiden zweiten Hebel der beiden Paare oder Hebelpaare miteinander drehfest und in identischer Ausrichtung zueinander verbunden sind. Auf diese Weise lässt sich eine besonders stabile und konzertierte Bewegung der beiden zweiten Hebel der Paare von Hebeln erreichen.

Dabei kann es zusätzlich oder alternativ vorgesehen sein, dass ein jeweiliger erster Hebel mit seinem ersten Ende an einer zumindest die Schwenkachse des ersten Endes oder zum ersten Ende des ersten Hebels definierende Hohlwelle drehfest angebracht ist.

Denkbar ist, dass dabei die ersten Hebel mit ihren ersten Enden an einem Ende der Hohlwelle angebracht sind und zusätzlich oder alternativ die beiden Enden der Hohlwelle und die beiden ersten Hebel der beiden Paare von Hebeln miteinander an ihren ersten Enden und an der Anzeigeeinheit drehfest und in identischer Ausrichtung verbunden sind. Auf diese Weise erfolgt eine entsprechende mechanische Kopplung der ersten Hebel der Paare von Hebeln oder Hebelpaare.

Des Weiteren kann es vorgesehen sein, dass zumindest ein Teil der Welle in zumindest einem Teil der Hohlwelle drehbar gelagert ist, so dass ihre Achsen zusammenfallen und die Schwenkachsen der oder zu den ersten Enden der ersten und zweiten Hebel der Paare von Hebeln bilden. Das Umfassen der Welle zu den ersten Enden der zweiten Hebel durch die Hohlwelle liefert einen besonders stabilen Bewegungsvorgang beim Verschwenken.

Die bisher beschriebenen Maßnahmen betreffen insbesondere die Verschwenkbewegung als solche. Die aufgezeigten Vorteile betreffen nicht nur das Positionieren der Anzeigeeinheit im Fahrzeuginnenraum bei normalem Gebrauch, sondern auch ein Bewegen der Anzeigeeinheit im Gefahrenfall, wenn also die Eigenschaften der Trägheit der Anzeigeeinheit zum Tragen kommen. Dies wird weiter unten erläutert.

Zunächst wird jedoch auf Aspekte eingegangen, die eine translatorische Positionierung der Anzeigeeinheit, also ein Verschieben in der Längserstreckungsrichtung des Fahrzeugs, betreffen.

In diesem Zusammenhang ist es von besonderem Vorteil, wenn gemäß einer anderen Ausgestaltungsform der erfindungsgemäßen Anzeigeeinrichtung diese jeweils ausgebildet ist mit einem einem Hebelpaar zugeordneten Führungselement, wobei an einem jeweiligen Führungselement die zweiten Enden der Hebel des zugeordneten Paares von Hebeln in einem vorgegebenen Abstand und um die Schwenkachsen schwenkbar angebracht sind. Auf diese Weise ergibt sich eine mittelbare mechanische Verbindung zwischen den zweiten Enden der Hebel in der Anwendung, nämlich mit dem Dachhimmel oder einem Konstrukt des Dachhimmels.

Dies hat bei der Vereinfachung einer möglichen translatorischen Bewegung besondere Vorteile, weil bei einem entsprechenden Bewegungsprozess nicht die einzelnen zweiten Enden der Hebel berücksichtigt werden müssen, sondern nur das Führungselement, an welchem diese zweiten Enden angebracht sind.

Besonders einfache Verhältnisse stellen sich ein, wenn die Führungselemente insbesondere gleich oder im Wesentlichen gleich, als Gleiter und/oder zu einer gleitenden Bewegung z.B. in einer jeweils vorzusehenden Führungsschiene eingerichtet ausgebildet sind.

Entsprechend ist es zur Ausbildung einer translatorischen Bewegungsmöglichkeit von besonderem Vorteil, wenn die erfindungsgemäße Anzeigeeinrichtung jeweils eine einem Führungselement zugeordnete Führungsschiene aufweist, welche zur Anbringung am Dachhimmel, mit einer Führungsbahn, zur Aufnahme des zugeordneten Führungselements und zu dessen Bewegung darin entlang der Führungsbahn ausgebildet ist.

Zur Vereinfachung der Verhältnisse kann es vorgesehen sein, die Führungsschienen als Paar, zueinander gleich oder im Wesentlichen gleich, linear oder im Wesentlichen linear, zueinander parallel ausgerichtet, zueinander bündig ausgerichtet, insbesondere in Bezug auf ihre jeweiligen ersten und zweiten Enden, im am zugeordneten Fahrzeug montierten Zustand der Anzeigeeinrichtung an einem oder im Bereich eines Dachhimmels angebracht und/oder im am zugeordneten Fahrzeug montierten Zustand der Anzeigeeinrichtung parallel zu einer Längserstreckungsrichtung des Fahrzeugs ausgerichtet auszubilden.

Obwohl grundsätzlich sämtliche Formen von Anzeigeeinrichtungen mit der erfindungsgemäßen Konfiguration im normalen Betrieb und im Havariefall zwischen Nichtgebrauchsstellungen und Gebrauchsstellungen bewegt werden können, ergeben sich besonders übersichtliche Verhältnisse dann, wenn die der Anzeigeeinrichtung zu Grunde liegende Anzeigeeinheit mit im Wesentlichen rechteckiger Gestalt, im am zugeordneten Fahrzeug montierten Zustand der Anzeigeeinrichtung mit parallel zu einer Querstreckungsrichtung des Fahrzeugs ausgerichteten Querkanten und/oder im am zugeordneten Fahrzeug montierten Zustand der Anzeigeeinrichtung mit parallel zu einer Längserstreckungsrichtung des zugeordneten Fahrzeugs ausgerichteten Längskanten ausgebildet ist.

Ferner kann es von Vorteil sein, wenn alternativ oder zusätzlich die ersten Hebel und/oder die zweiten Hebel jeweils und insbesondere untereinander als Paar, zueinander gleich oder im Wesentlichen gleich, mit gleicher Länge, linear oder im Wesentlichen linear, zueinander parallel ausgerichtet und/oder zueinander bündig ausgerichtet ausgebildet sind oder werden.

Grundsätzlich ist es denkbar, die Führungselemente, den Koppelhebel und die Führungsschienen so auszubilden, dass über entsprechende Hemmungen ein Aus- und Einklappen und/oder ein Positionieren der Anzeigeeinheit der erfindungsgemäßen Anzeigeeinrichtung per Hand erfolgen kann. Es sind rein manuell oder passiv betätigbare erfindungsgemäße Anzeigeeinrichtungen denkbar.

Für eine Komfortsteigerung kann jedoch bei bevorzugten Ausführungsformen der erfindungsgemäßen Anzeigeeinrichtung eine Antriebseinheit ausgebildet sein oder werden, welche zum, insbesondere gesteuerten, Verschwenken der Anzeigeeinheit um die Schwenkachse der Anzeigeeinheit ausgebildet ist und welche dazu insbesondere einen ersten steuerbaren Antrieb und ein mit diesem und mit den zweiten Hebeln mechanisch gekoppeltes oder koppelbares Antriebsmittel aufweist.

Das Antriebsmittel kann zum Beispiel nach Art eines Getriebes und zum Verschwenken der zweiten Hebel und/oder der Welle der zweiten Hebel oder zu den zweiten Hebeln um deren Schwenkachse ausgebildet sein.

Alternativ oder zusätzlich kann ein Antrieb auch für die translatorische Bewegung, d.h. für das Verstellen der Anzeigeeinheit der Anzeigeeinrichtung in der Längsrichtung des Fahrzeugs im montierten Zustand, eingesetzt werden.

So ist es bei einer anderen vorteilhaften Ausgestaltungsform der erfindungsgemäßen Anzeigeeinrichtung vorgesehen, dass die Antriebseinheit zum Antreiben der Führungselemente für ein gemeinsames, gleiches und/oder translatorische Bewegen in einer jeweiligen Führungsschiene eingerichtet ist.

Entsprechend ist es denkbar, dass die Antriebseinheit mit einem steuerbaren Antrieb und mit einem mit diesem mechanisch gekoppelten oder koppelbaren und den Führungselementen zugeordneten Antriebsmittel ausgebildet ist, insbesondere in Form eines Bürstenkabels oder Helixkabels, welches für einen, insbesondere kämmenden, Eingriff durch die Führungselemente zu deren Bewegung eingerichtet ist.

Es kann dabei also insbesondere ein Antrieb verwendet werden, wie er auch bei Schiebedächern zum Einsatz kommen kann, um die entsprechenden Dachelemente in einem entsprechenden Rahmen anzutreiben.

Gerade bei der Verwendung von Anzeigeeinrichtungen, die mit dem Einnehmen einer Gebrauchsstellung in den Fahrgastraum des Innenraums des Fahrzeugs hineinragen, sind Sicherheitsaspekte von besonderer Bedeutung, insbesondere bei der Verwendung großer oder massereicher Anzeigeeinheiten. Bei einem Unfall soll eine Kollision der Anzeigeeinrichtung mit einem Fahrgast im Innenraum des Fahrzeugs möglichst vermieden werden.

Um dies zu erreichen, können gemäß einem weiteren Aspekt der vorliegenden Erfindung bestimmte Sicherheitsmechanismen in die erfindungsgemäße Anzeigeeinrichtung eingebracht werden.

So ist es denkbar, eine Rutschkupplung und/oder Bremse, insbesondere mit Rücklaufsperre, an einem oder in einem Führungselement, zwischen einem Führungselement und einer zugeordneten Führungsschiene, im Bereich eines Antriebs der zweiten Hebel und/oder im Bereich der ersten und/oder zweiten Hebel selbst und insbesondere mit einer vorbestimmten Haltekraft als Sollhaltekraft auszubilden.

Die Anordnungen werden derart gewählt, dass sich beim Überschreiten der Sollhaltekraft zum Beispiel ein jeweiliges Führungselement in einer jeweils zugeordneten Führungsschiene der einwirkenden Kraft folgend bewegt und/oder dass sich eine der einwirkenden Kraft folgende Verschwenkbewegung zurück in die Nichtgebrauchsstellung der Anzeigeeinheit ergibt.

Das bedeutet, dass in einem Havariefall, also z.B. einem Aufprall, auf Grund der Trägheit die maximale Haltekraft oder Bremskraft der Kupplung oder der Bremse überschritten wird, so dass z.B. die Führungselemente entsperrt werden und sich entlang der Führungsbahnen der Führungsschienen bewegen und somit der Bewegung eines Fahrgasts im Innenraum ausweichen.

Es ist also in diesem Zusammenhang ein rein translatorisches Ausweichen der Anzeige und damit ein Insassenschutz durch eine reine Längsbewegung der Anzeige in der Fahrzeuglängserstreckungsrichtung, möglich.

Über die entsprechende mechanische Kopplung der Paare von Hebeln mit der Anzeigeeinheit ergibt sich gegebenenfalls zusätzlich oder rein alternativ, dass die Anzeigeeinheit aus dem Fahrgastraum, also dem Innenraum des Fahrzeugs, von einer Gebrauchsstellung in eine Nichtgebrauchsstellung zurückschwenkt und somit ausweicht, wodurch eine Kollision mit dem Fahrgast mit höherer Zuverlässigkeit verhindert werden kann. Dabei kann insbesondere die Verwendung einer entsprechenden Rutschkupplung in einer Antriebswelle hilfreich sein.

Bei diesen Mechanismen werden also insbesondere Trägheitseinflüsse genutzt, die bei einem Aufprall zum Tragen kommen.

Dabei können die Sollhaltekraft und/oder das Sollhaltemoment Werte aufweisen, welche für die Sollhaltekraft zum Beispiel im Bereich von etwa 1 kN und/oder in einem Bereich liegen, welcher einer Beschleunigung im Bereich von etwa 10 g entspricht.

Gemäß einem anderen Aspekt der vorliegenden Erfindung wird entsprechend auch ein Fahrzeug geschaffen. Dieses weist eine Karosserie, einen durch die Karosserie gebildeten Innenraum mit einem Dachhimmel sowie eine am oder im Dachhimmel angebrachte und erfindungsgemäß ausgestaltete Anzeigeeinrichtung auf.

Bei einer besonders bevorzugten Ausgestaltungsform des erfindungsgemäßen Fahrzeugs sind zwei Führungsschienen der Anzeigeeinrichtung am oder im Dachhimmel derart angebracht, dass sie sich mit gleicher Länge bündig und parallel zueinander in einer Längserstreckungsrichtung des Fahrzeugs erstrecken, insbesondere an oder - in Bezug auf eine Querstreckungsrichtung des Fahrzeugs - in außen gelegenen Bereichen des Dachhimmels.

Ferner sind entsprechend zwei Führungselemente der Anzeigeeinrichtung derart in den Führungsschienen aufgenommen, dass eine entsprechende erste Querkante der Anzeigeeinheit der Anzeigeeinrichtung, an deren Bereich die ersten Führungselemente angebracht sind, parallel zur Querstreckungsrichtung des Fahrzeugs und in Bezug auf die Längserstreckungsrichtung des Fahrzeugs in Richtung auf eine dem Fond des Fahrzeugs zugewandte Seite zu angeordnet ist.

Bei einer bevorzugten Ausgestaltungsform kann die erfindungsgemäße Anzeigeeinrichtung im Zusammenhang mit einem Fach oder einer Kassette für einen Dachrollo eines Panoramadaches oder dergleichen ausgebildet sein. Dabei ist es denkbar, dass dabei die Führungsschienen des Dachrollos auch als Führungsschienen für die Führungselemente der Anzeigeeinrichtung verwendet werden. Für eine bessere Trennung der Bewegungsformen von Dachrollos und Anzeigeeinrichtung werden jedoch separate Führungsschienen bevorzugt.

### Kurzbeschreibung der Figuren

Weitere Einzelheiten, Merkmale und Vorteile der Erfindung ergeben sich aus der nachfolgenden Beschreibung und den Figuren.
- Figuren 1 bis 4: zeigen in schematischer und perspektivischer Seitenansicht eine Ausführungsform des erfindungsgemäßen Fahrzeugs, welches mit einer Ausführungsform der erfindungsgemäßen Anzeigeeinrichtung ausgestattet ist, wobei die Anzeigeeinheit in verschiedenen Stellungen im Innenraum des Fahrzeugs angeordnet ist.
- Figuren 5 bis 8: zeigen in schematischer und perspektivischer Draufsicht eine weitere Ausführungsform des erfindungsgemäßen Fahrzeugs, welches mit einer Ausführungsform der erfindungsgemäßen Anzeigeeinrichtung ausgestattet ist, wobei die Anzeigeeinheit in verschiedenen Stellungen im Innenraum des Fahrzeugs angeordnet ist.
- Figuren 9 bis 15: zeigen in verschiedenen schematischen und gegebenenfalls geschnittenen perspektivischen Seitenansichten und Draufsichten Ausführungsformen der erfindungsgemäßen Anzeigeeinrichtung im Zusammenhang mit einem erfindungsgemäßen Fahrzeug und einem dort ausgebildeten Dachrollo.
- Figuren 16 bis 19: zeigen in schematischen und perspektivischen Seitenansichten Aspekte einer erfindungsgemäßen Anzeigeeinrichtung im Zusammenhang mit einem Antrieb zum Ausführen der Verschwenkbewegung.
- Figuren 20 bis 22: zeigen in schematischer und perspektivischer Seitenansicht eine konkrete Ausgestaltungsform der erfindungsgemäßen Anzeigeeinrichtung im Hinblick auf die Konfiguration der Paare von Hebeln und deren Zusammenwirken.

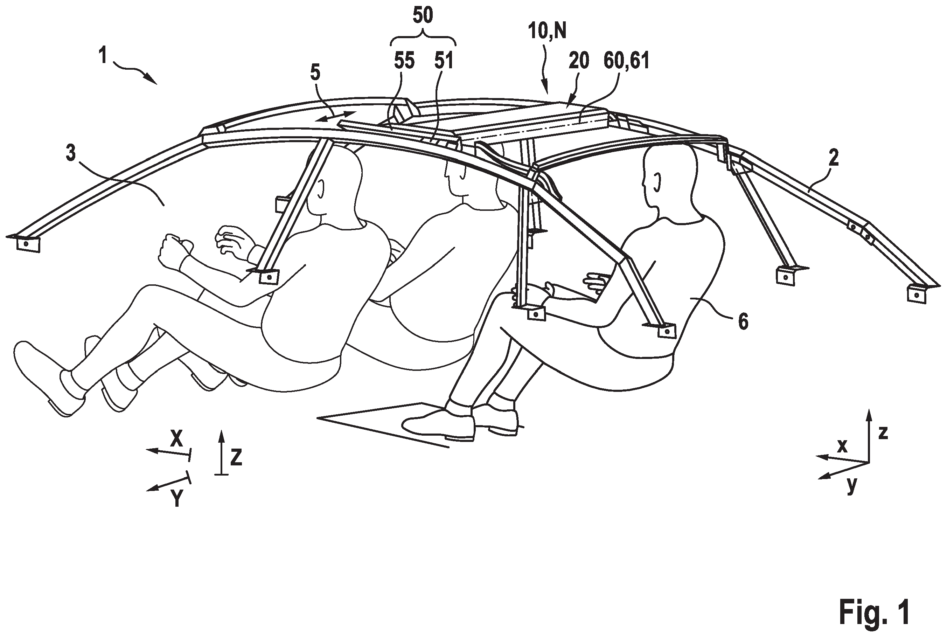

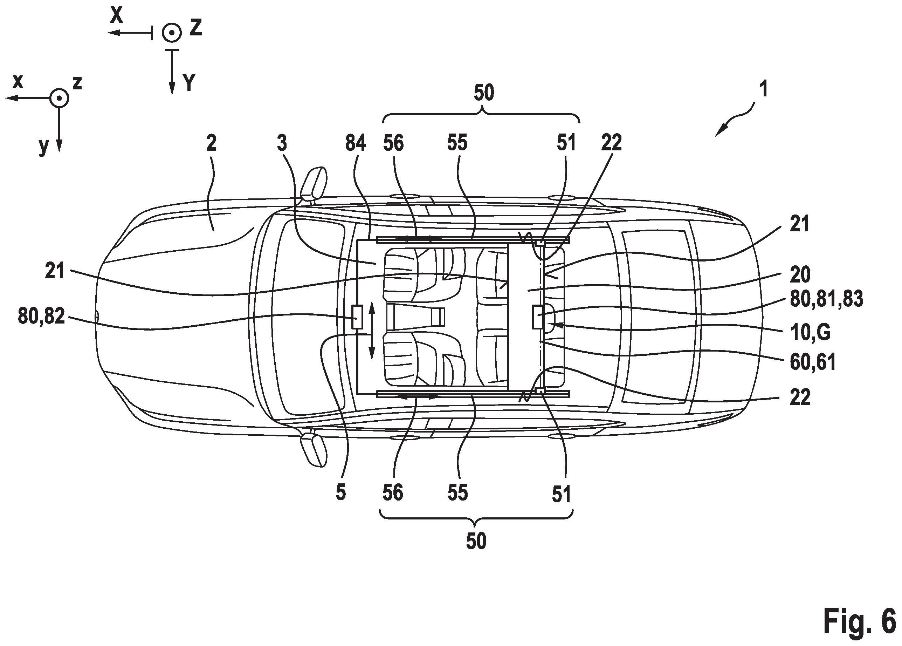

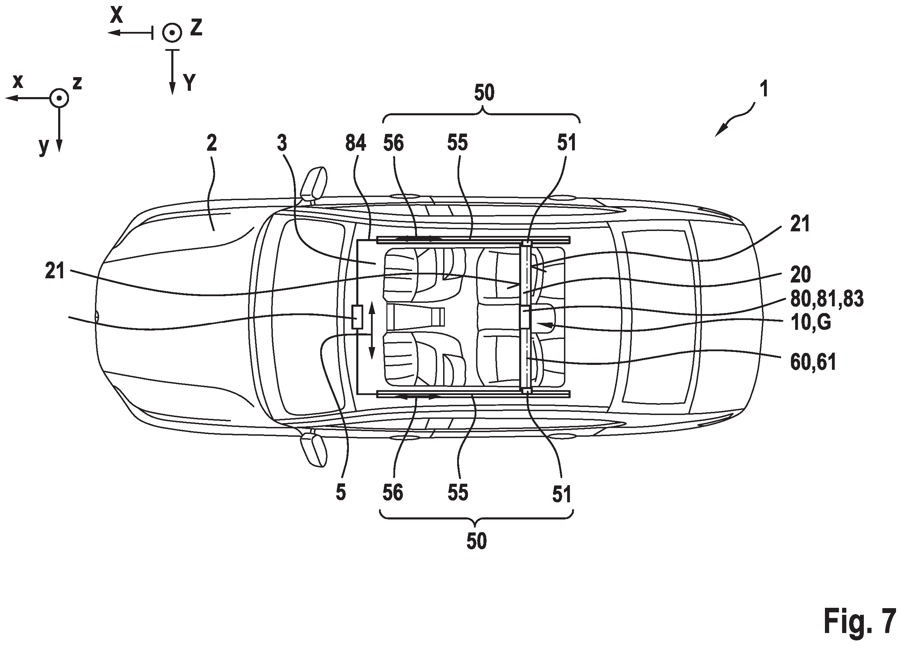

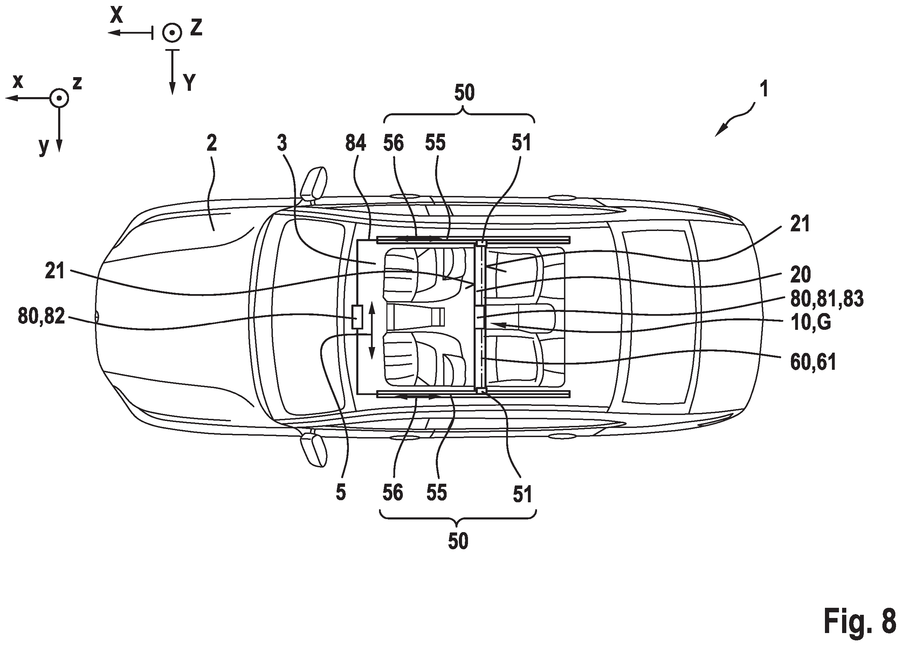

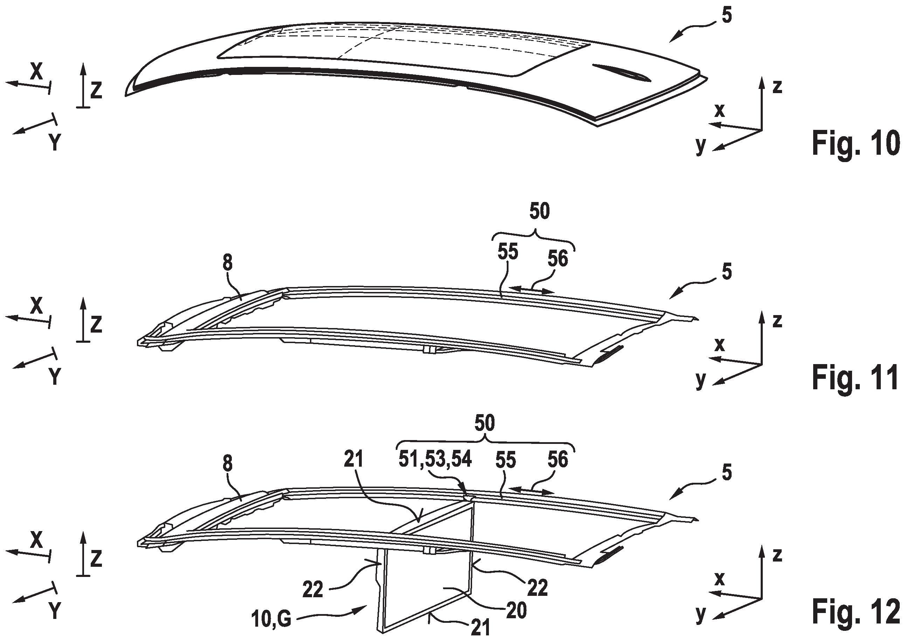

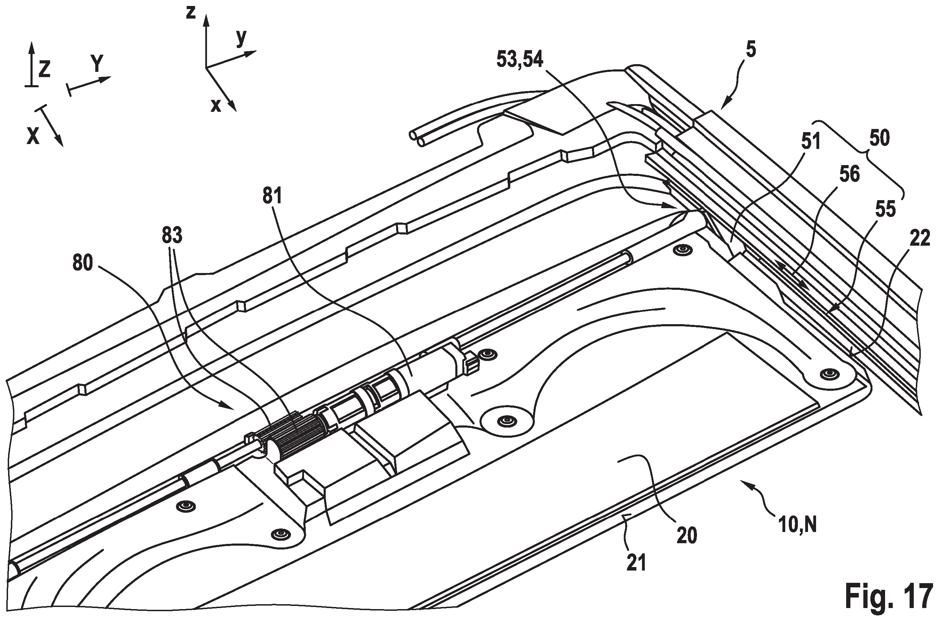

Nachfolgend werden unter Bezugnahme auf die Figuren 1 bis 22 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Die Figuren 1 bis 4 zeigen in schematischer und perspektivischer Seitenansicht eine Ausführungsform des erfindungsgemäßen Fahrzeugs 1, welches mit einer Ausführungsform der erfindungsgemäßen Anzeigeeinrichtung 10 ausgestattet ist, wobei die Anzeigeeinheit 20 der Anzeigeeinrichtung 10 in verschiedenen Stellungen N, G im Innenraum 3 des Fahrzeugs 1 angeordnet ist.

In sämtlichen Figuren und auch in den Figuren 1 bis 4 ist das erfindungsgemäße Fahrzeug 1 schematisch dargestellt durch Komponenten einer Karosserie 2, welche einen Innenraum 3 des Fahrzeugs 1 umgeben und einen Dachhimmel 5 definieren.

Das jeweilige Fahrzeug 1 erstreckt sich in einer Längserstreckungsrichtung X parallel zur x-Richtung, in einer Querstreckungsrichtung Y parallel zur y-Richtung sowie in einer Höhenrichtung Z parallel zur z-Richtung, welche durch die jeweils angegebenen Dreibeine definiert sind.

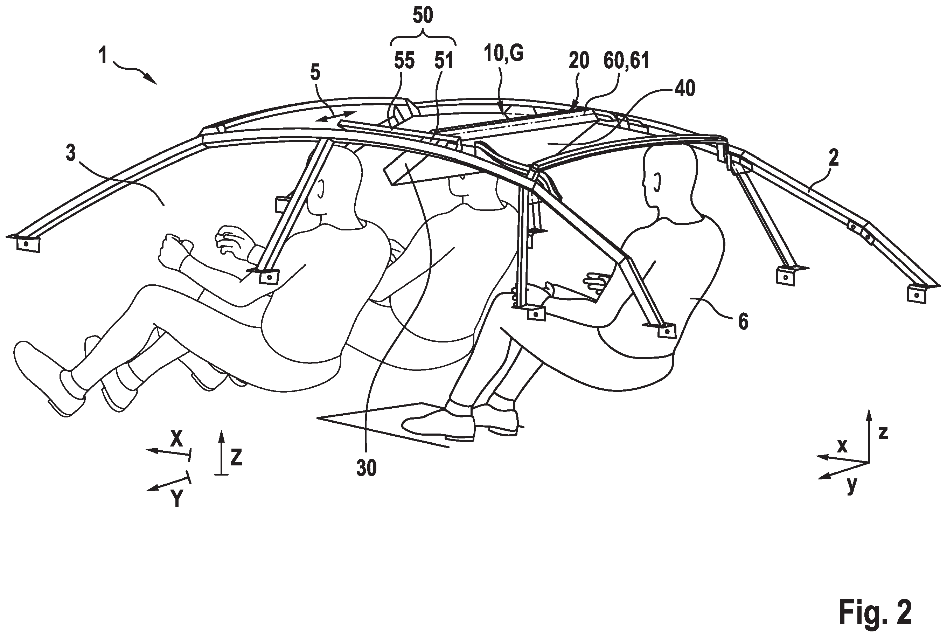

Eine jeweils dargestellte Anzeigeeinrichtung 10 wird in den Darstellungen der Figuren 1 bis 4 gebildet von der eigentlichen Anzeigeeinheit 20, zum Beispiel mit einem Träger 30, welcher ein Anzeigeelement 40, zum Beispiel einen Monitor oder einen Bildschirm, trägt, wie dies aus den Figuren 2 bis 4 hervorgeht. Die Anzeigeeinheit 20 ist hier von im Wesentlichen rechteckiger Gestalt mit längeren Querkanten 21 parallel zur Querstreckungsrichtung Y des Fahrzeugs 1 und mit kürzeren Längskanten 22 parallel zur Längserstreckungsrichtung X des Fahrzeugs 1.

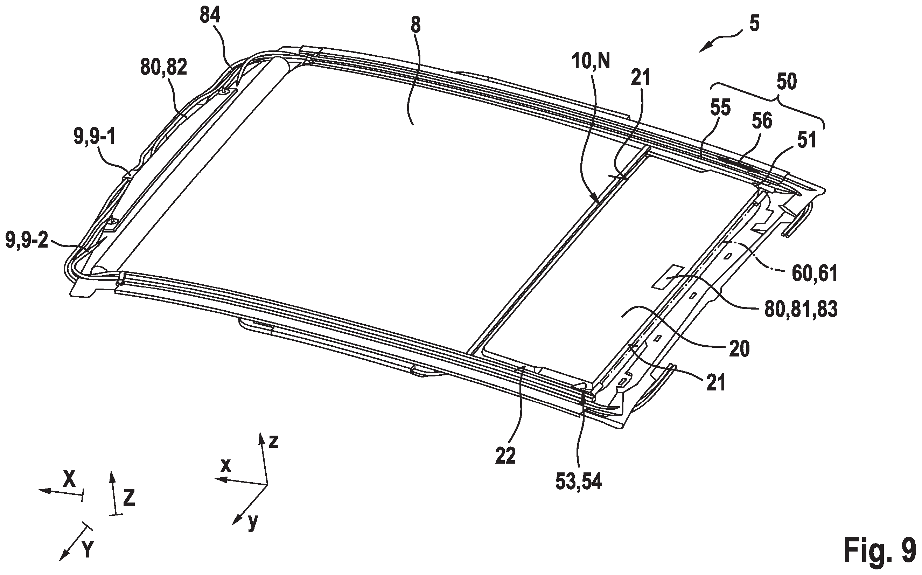

Ferner ist Bestandteil der erfindungsgemäßen Anzeigeeinrichtung eine Bewegungseinheit 50. Diese wird bei der in den Figuren 1 bis 4 dargestellten Ausführungsform gebildet von zwei Führungsschienen 55, zwei Führungselementen 51, zwei Paaren erster und zweiter Hebel 53, 54, wobei letztere aufgrund ihrer Größe erst im weiteren Zusammenhang mit den Figuren 9 bis 12, 16, 17 sowie 19 bis 22 explizit erkennbar sind.

Die Führungsschienen 55 sind bei dieser Ausführungsform identisch ausgebildet, besitzen eine lineare Gestalt mit gleicher Länge, sind parallel zueinander und bündig am Dachhimmel 5 angeordnet und bilden jeweils eine Führungsbahn 56.

Die Führungsschienen 55 erstrecken sich bei der Ausführungsform der Figuren 1 bis 4 in der Längserstreckungsrichtung X des Fahrzeugs 1. Sie befinden sich in der Querstreckungsrichtung Y voneinander beabstandet an den Seiten des Dachhimmels 5, also insbesondere im Übergang vom Dach zur Fahrzeugseite.

Die Führungselemente 51 sind als Gleiter ausgebildet und dazu eingerichtet in einer jeweiligen Führungsschiene 55 aufgenommen und darin bewegt zu werden oder sich darin entlang der jeweiligen Führungsbahn 56 zu bewegen.

Im Bereich einer ersten Querkante 21 der Anzeigeeinheit 20 sind die Führungselemente 51 derart drehbar gelagert an der Anzeigeeinheit 20 angebracht, nämlich über die in den weiteren Figuren explizit dargestellten ersten und zweiten Hebel 53, 54 und deren erste Enden 53-1, 54-1 und deren drehbare Lagerung zueinander, dass dadurch eine Schwenkachse oder Drehachse 61 der Anzeigeeinheit 20 definiert wird, um welche die Anzeigeeinheit 20 mittels einer ausgebildeten Schwenkeinheit 60 in ihrem Winkel gegenüber dem Dachhimmel 5 und insbesondere zwischen einer Nichtgebrauchsstellung N und einer Gebrauchsstellung G verschwenkt werden kann.

Die Montage der Führungselemente 51 erfolgt insbesondere an derjenigen Querkante 21 der Anzeigeeinheit 20, welche auf einer Seite liegt, die dem Fond eines Fahrzeugs 1 zugeordnet ist und die bei Montage der Anzeigeeinheit 20 am Fahrzeug 1 der Seite des Fonds des Fahrzeugs 1 zugewandt ist. Die Montage der Führungselemente 51 erfolgt vorzugsweise in der Nachbarschaft zu den gegenüberliegenden Längskanten 22 der Anzeigeeinheit 20, insbesondere also quasi im Kreuzungsbereich der Längskanten 22 und der Querkanten 21.

Mit der so gewählten Anordnung aus Führungselementen 51 und Führungsschienen 55 mit Führungsbahnen 56 einerseits und der Paare von Hebeln 53, 54 mit entsprechender Anordnung an den Führungselementen 51 und an der Anzeigeeinheit 20 andererseits ergibt sich beim Bewegen der Führungselemente 51 in den Führungsschienen 55 die Möglichkeit einer Translation und durch das Verschwenken über die Paare von Hebeln 53, 54 ein Bewegen zwischen einer Nichtgebrauchsstellung N und einer oder mehreren Gebrauchsstellungen G durch Verschwenken der Anzeigeeinheit 20, wobei verschiedene Neigungswinkel zum Dachhimmel 5 und/oder verschiedene laterale Positionen entlang der Führungsschienen 55 und somit bei Montage in einem Fahrzeug 1 entlang der Längserstreckungsrichtung X des Fahrzeugs 1 eingenommen werden können.

In der Figur 1 befindet sich die Anzeigeeinheit 20 in einer Nichtgebrauchsstellung N, nämlich in einem Zustand, bei welchem die Anzeigeeinheit im Wesentlichen parallel zum Dachhimmel 5 ausgerichtet ist.

Im Übergang zu dem in Figur 2 gezeigten Zwischenzustand wird die Anzeigeeinheit 50 durch entsprechendes Bewegen der Führungselemente 51, 52 in der Führungsschiene 55 translatorisch und durch Verschwenken vom Dachhimmel 5 in den Fahrgastraum 3 hinein in eine erste Gebrauchsstellung G gebracht.

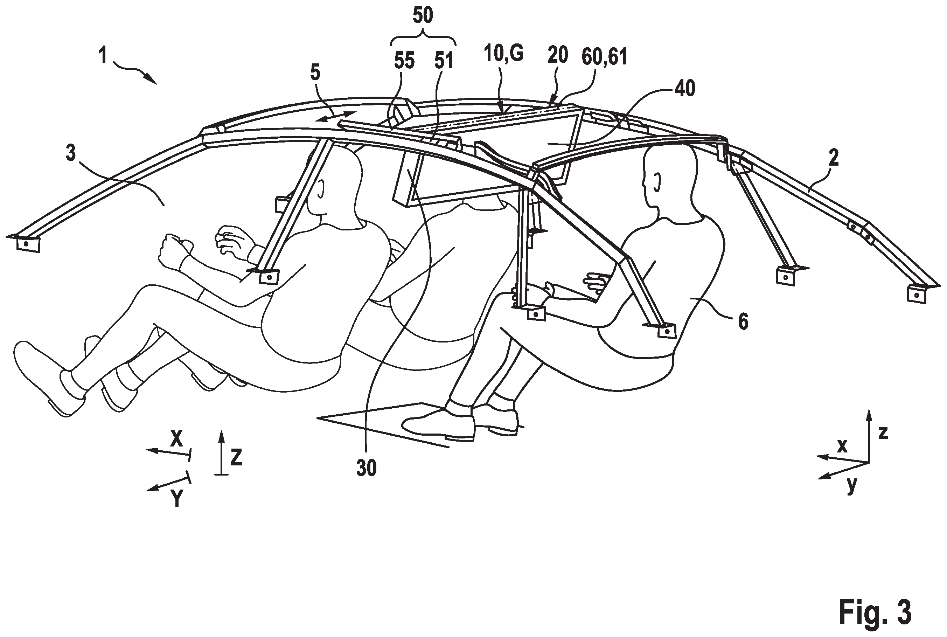

Im Übergang zu dem in Figur 3 dargestellten Zwischenzustand wird die Anzeigeeinheit 20 zu einem größeren Winkel zum Dachhimmel 5 abgeschwenkt und in eine stärker senkrecht ausgerichtete weitere Gebrauchsstellung G überführt.

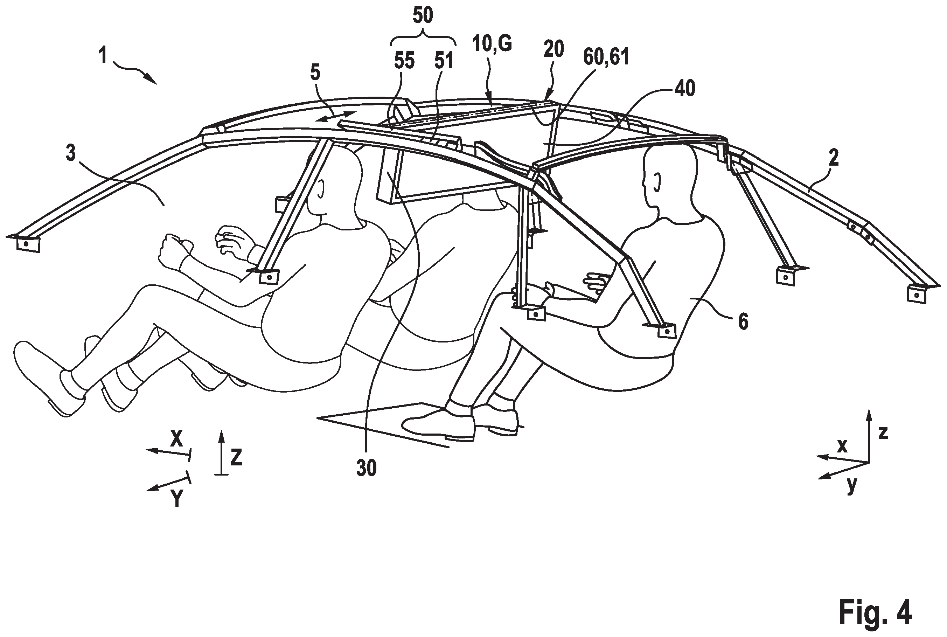

Im Übergang zu dem in Figur 4 dargestellten Zwischenzustand wird dann durch ein rein translatorisches Bewegen der Führungselemente 51 ein reines Verschieben ohne Änderung des Neigungswinkels bewirkt, so dass der Blickabstand eines hinten sitzenden Insassen 6 des Fahrzeugs 1 angepasst und insbesondere vergrößert werden kann. Im diesem Fall wurde im Übergang zu dem in Figur 4 gezeigten Zwischenzustand die Anzeigeeinheit in den vorderen Bereich des Fahrzeugs 1 bewegt.

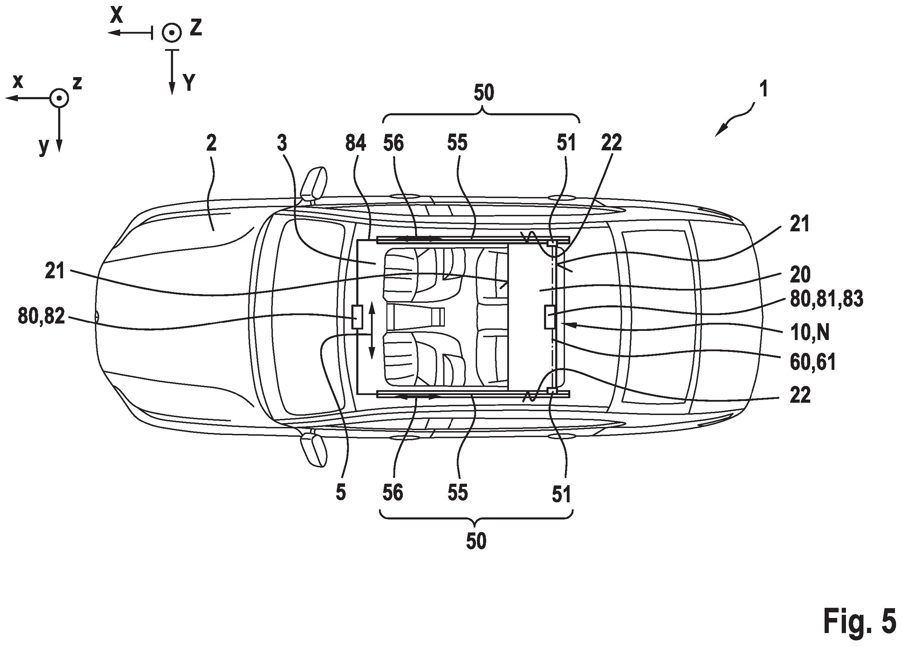

Die vorangehend beschriebene Struktur der Anzeigeeinrichtung 10 mit Anzeigeeinheit 20 und Bewegungseinrichtung 50 auch auf der Grundlage der weiteren Figuren 5 bis 18 wird weiter verdeutlicht.

Die Figuren 5 bis 8 zeigen in schematischer und perspektivischer Draufsicht eine weitere Ausführungsform des erfindungsgemäßen Fahrzeugs 1, welches mit einer Ausführungsform der erfindungsgemäßen Anzeigeeinrichtung 10 ausgestattet ist, wobei die Anzeigeeinheit 20 in verschiedenen Stellungen N und G im Innenraum 3 des Fahrzeugs 1 angeordnet ist.

In den Figuren 5 bis 8 sind im Zusammenhang mit der Schwenkeinheit 60 zum Verschwenken um die Schwenkachse 61 und der Bewegungseinrichtung 50 mit Führungselement 51, Führungsschiene 55 mit Führungsbahn und Schwenkeinheit 60 als deren Bestandteil auch eine Antriebseinheit 80 mit einem ersten Antrieb 81, zu Beispiel einem Motor, und einem Getriebe als erstes Antriebsmittel 83 für das Verschwenken um die Schwenkachse 61 sowie mit einem zweiten Antrieb 82 und Bürstenkabeln oder Helixkabeln als zweiten Antriebsmitteln 84 für das Verschieben der als Gleiter ausgebildeten Führungselemente 51 in den Führungsschienen 55 explizit dargestellt, wobei die Führungsschienen 55 jeweils eine Führungsbahn 56 in der Längserstreckungsrichtung X des Fahrzeugs 1 aufweisen und am Dachhimmel 5 montiert sind.

Figuren 9 bis 15 zeigen in verschiedenen schematischen und gegebenenfalls geschnittenen perspektivischen Seitenansichten und Draufsichten Ausführungsformen der erfindungsgemäßen Anzeigeeinrichtung 10 im Zusammenhang mit einem erfindungsgemäßen Fahrzeug 1 und einem dort ausgebildeten Dachrollo 8.

Der Dachrollo 8 ist im Zusammenhang mit einer kassettenartigen Aussparung im Bereich des Dachhimmels 5 ausgebildet. In Führungsschienen 55 wird über entsprechende Führungselemente und einem Antrieb 9 mit Motor 9-1 und einem Antriebsmittel 9-2 zum Beispiel in Form eines Bürstenkabels oder Helixkabels die Bahn des eigentlichen Rollos geführt, um das entsprechende Panoramafenster vollständig oder teilweise zu bedecken oder freizugeben.

Über eine zusätzliche oder erweiterte Aussparung in der Kassette des Dachrollos 8 lässt sich, wie das in Figur 9 dargestellt ist, die erfindungsgemäße Anzeigeeinrichtung 10 in der Nichtgebrauchsstellung N der Anzeigeeinheit 20 unterbringen. Auf der vom Fond abgewandten Seite mit dem Rolloantrieb 9 ist ebenfalls ein zweiter Antrieb 82 der Antriebseinheit 80 der Anzeigeeinrichtung 10 ausgebildet, nämlich zum Bewegen der als Gleiter ausgebildeten Führungselemente 51 in der Führungsschiene 50 für das rein translatorische Verstellen der Anzeigeeinheit 20, sofern diese aus der Nichtgebrauchsstellung N parallel zum Dachhimmel 5 abgeschwenkt ist. Als Antriebsmittel 84 wird für die Bewegung der Führungselemente 51 zum Beispiel ein Bürstenkabel oder Helixkabel verwendet.

Figur 9 zeigt die erfindungsgemäße Anzeigeeinrichtung 20 für den Fall der Nichtgebrauchsstellung N.

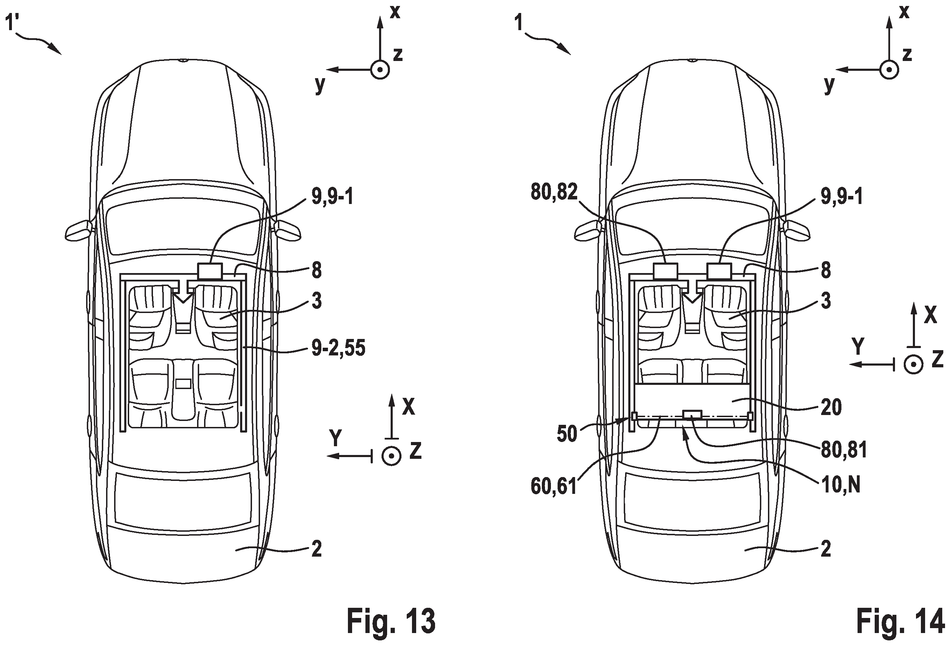

Die Figuren 13 und 14 zeigen ein herkömmliches Fahrzeug 1' mit einem Dachrollo 8 mit einem Antrieb 9 aus Motor 9-1 und Antriebsmittel 9-2 in Führungsschienen 55 bzw. ein erfindungsgemäßes Fahrzeug 1, bei welchem das Dachrollo 8 mit einer erfindungsgemäßen Anzeigeeinrichtung kombiniert ist, wobei sich diese in Figur 14 in der Nichtgebrauchsstellung der Anzeigeeinheit 20 parallel zum Dachhimmel 5 befindet.

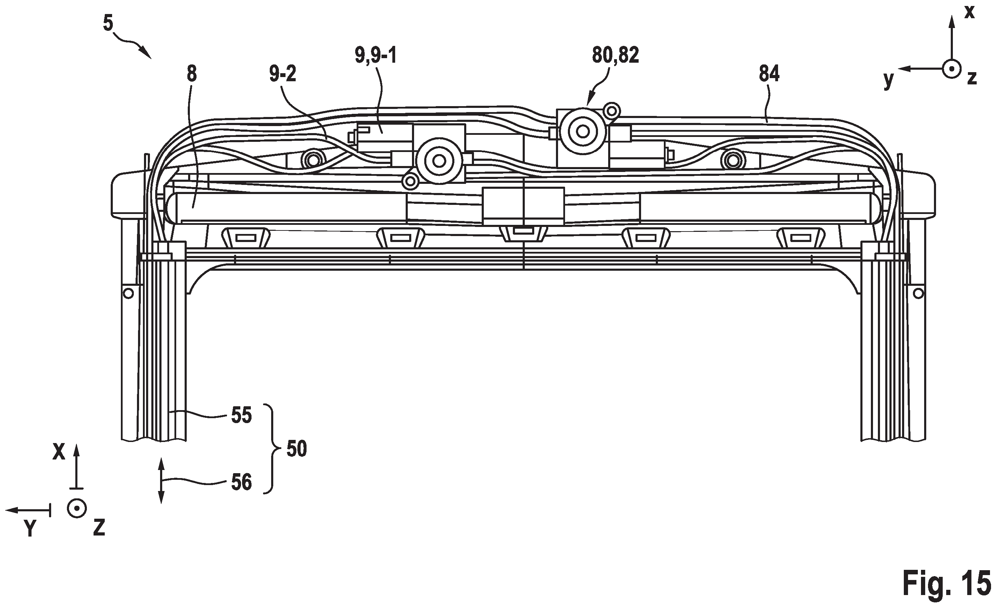

Figur 15 zeigt in größerem Detail den Bereich der Antriebseinheiten 9 für das Dachrollo 8 einerseits und 80 für die erfindungsgemäße Anzeigeeinrichtung 10 andererseits.

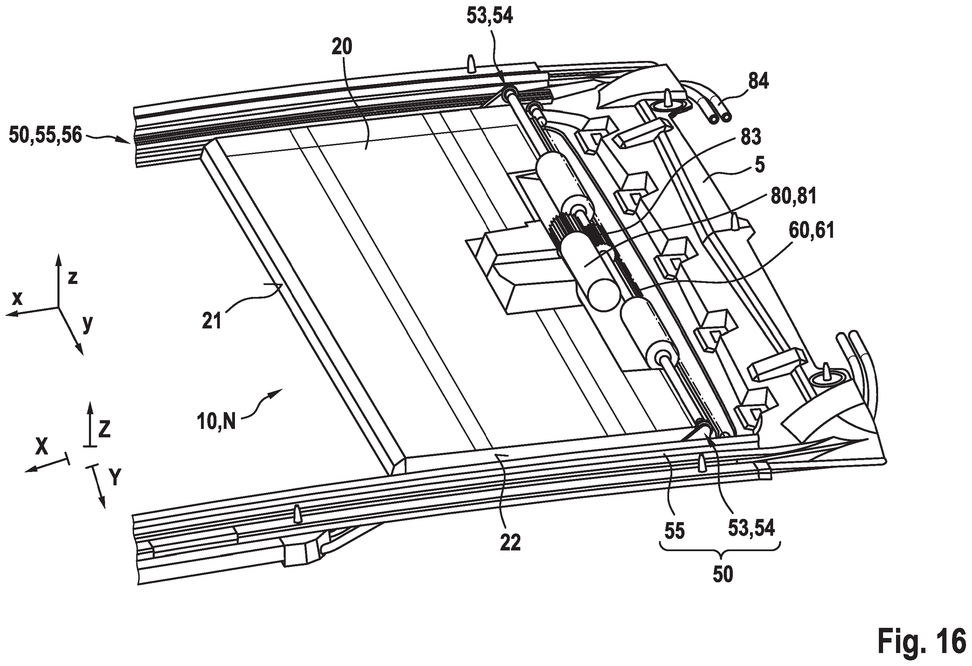

Figuren 16 bis 19 zeigen in schematischen und perspektivischen Seitenansichten Aspekte einer erfindungsgemäßen Anzeigeeinrichtung 10 im Zusammenhang mit einem ersten Antrieb 81 der Antriebseinheit 80 zum Ausführen der Verschwenkbewegung. Dem Kern nach wird der Antrieb 81 für die Verschwenkbewegung gebildet von einem entsprechenden Motor, welcher über ein Getriebe als Antriebsmittel 83 die Welle 64 antreibt. An deren Enden sind die ersten Enden 54-1 der zweiten Hebel 54 drehfest angebracht, so dass diese beim Drehen der Welle 64 um ihre Schwenkachsen 54-5 schwenken. Dies führt über die Kopplung zu den ersten Hebeln 53 der Paare von Hebeln 53, 54, nämlich über deren erste Enden 53-1, zu einem gesteuerten Verschwenken der Anzeigeeinheit 20 um die zusammenfallenden Achsen 61, 53-6.

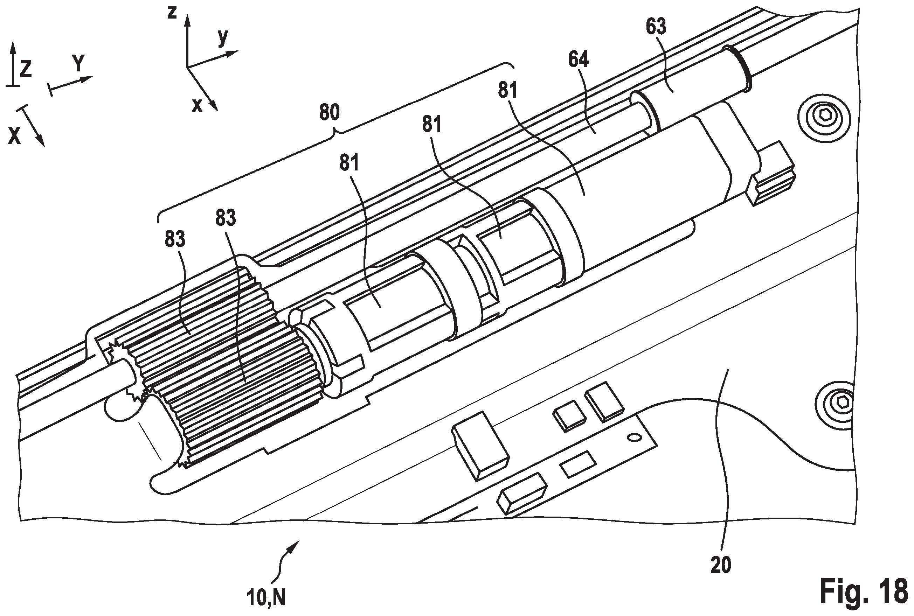

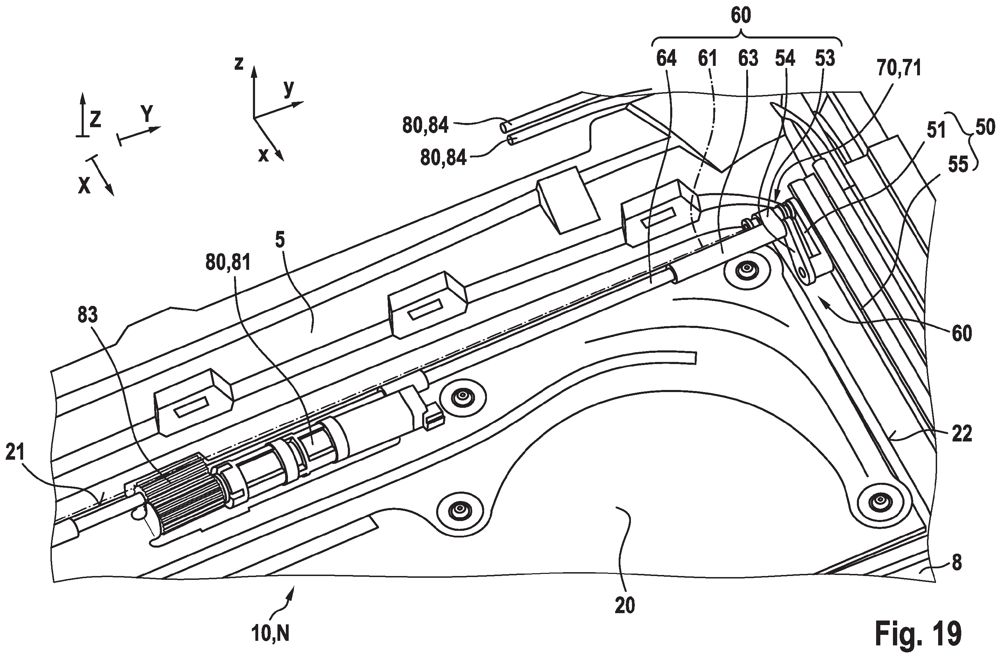

Aus den Figuren 18 und 19 ist ersichtlich, dass die Welle 64, an welcher die zweiten Hebel 54 mit ihren ersten Enden 44-1 drehfest angebracht sind, drehbar gelagert in einer Hohlwelle 63 läuft, wobei die Hohlwellen 63 drehfest einerseits mit der Anzeigeeinheit 20 und andererseits drehfest mit den ersten Enden der ersten Hebel 53 verbunden ist und mehrstückig oder in Abschnitten aufgeteilt aufgebaut sein kann.

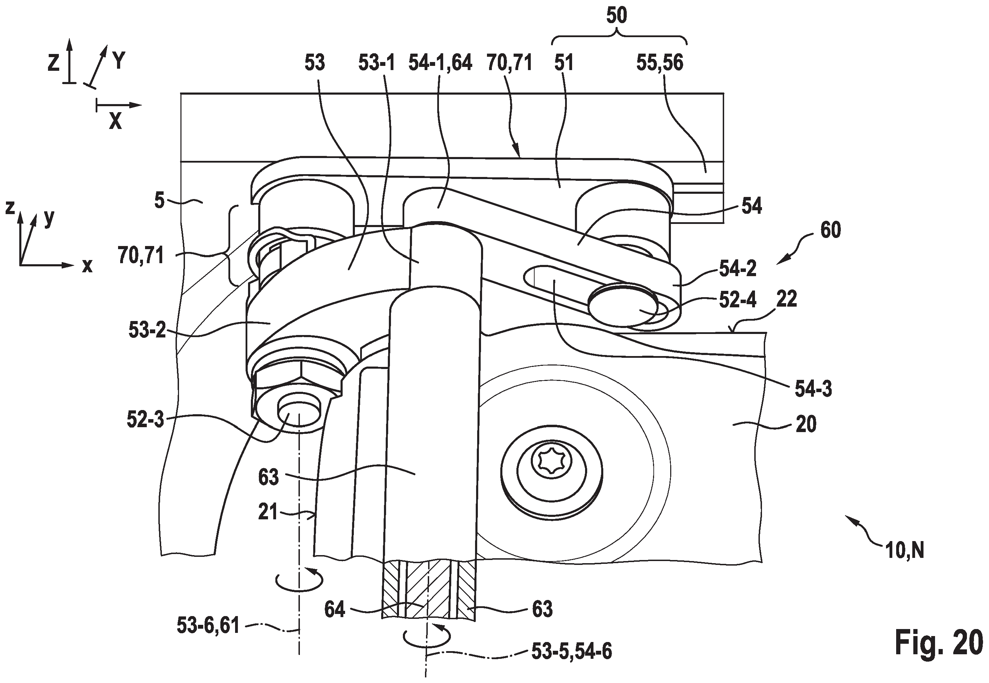

Figuren 20 bis 22 zeigen in schematischer und perspektivischer Seitenansicht eine konkrete Ausgestaltungsform der erfindungsgemäßen Anzeigeeinrichtung 10 im Hinblick auf die Konfiguration der Paare von Hebeln 53, 54 und deren Zusammenwirken.

An der Anzeigeeinheit 20 sind im Kreuzungsbereich zwischen Querkante 21 und Längskanten 22 Führungselemente 51 angebracht, um als Gleiter in Führungsschienen 55 mit Führungsbahnen 56 translatorisch bewegt werden zu können, so dass sich ein Verschieben der Anzeigeeinheit 20 in Längsrichtung X des zu Grunde liegenden Fahrzeugs 1 realisieren lässt.

Die Anbringung der Führungselemente 51 erfolgt derart, dass simultan oder getrennt von der translatorischen Bewegung auch ein Verschwenken der Anzeigeeinheit 20 um eine Schwenkachse 61 möglich ist. Ein spezieller Aufbau aus Paaren erster und zweiter Hebel 53 und 54, die einerseits am jeweiligen Führungselement 51 und andererseits an der Anzeigeeinheit 20 angebracht sind, wird die jeweilige Schwenkachse 61 definiert.

Über eine Hohlwelle 63 oder Abschnitte einer Hohlwelle 63, die drehfest an der Anzeigeeinheit 20 angebracht sind, werden erste Enden 53-1 erster Hebel 53 ebenfalls drehfest mit der Anzeigeeinheit 20 verbunden. Die den ersten Enden 53-1 gegenüberliegenden zweiten Enden 53-2 der ersten Hebel 53 weisen drehbar gelagert im Wesentlichen einen Bolzen oder Zapfen 52-3 auf, welcher andererseits am Führungselement 51 befestigt ist. Durch diese Maßnahme sind die jeweiligen ersten Hebel 53 und damit die Anzeigeeinheit 20 grundsätzlich um die Schwenkachse 53-6 der ersten Bolzen oder Zapfen 52-3 verschwenkbar, so dass die Schwenkachsen 53-6 der Bolzen 53-2 die Schwenkachse 61 der Anzeigeeinheit 20 bilden.

Für eine Stabilisierung der Schwenkbewegung einerseits und auch für die Möglichkeit, die Verschwenkbewegung motorisch zu bewirken, sind zweite Schwenkhebel 54 mit ersten Enden 54-1 und zweiten Enden 54-2 vorgesehen, und zwar als Langlochhebel mit einem Langloch 54-3, welches sich, ausgehend vom zweiten Ende 54-2 des zweiten Hebels 54, in Richtung auf das erste Ende 54-1 des zweiten Hebels 54 erstreckt, dieses jedoch nicht erreicht. Das Langloch 54-2 verläuft also in der Haupterstreckungsrichtung oder Längserstreckungsrichtung des jeweiligen zweiten Hebels 54.

In dem Langloch 54-3 ist ein Bolzen 52-4 verschiebbar und drehbar gelagert aufgenommen. Dieser Bolzen 52-4 des zweiten Hebels 54 ist andererseits ebenfalls mit dem Führungselement 51 verbunden, und zwar in räumlichem Abstand zum Montagestelle des Bolzens 52-3 des ersten Hebels 53.

Die beiden Bolzen oder Zapfen 52-3 und 52-4 besitzen also am Führungselement 51 einen festen Abstand.

Am ersten Ende 54-1 des zweiten Hebels 54 ist eine Welle 64 angebracht, welche als Antriebswelle fungieren kann. Die Welle 64 ist drehbar gelagert in der Hohlwelle 63 oder in deren Abschnitten.

Im Zusammenhang mit den Figuren 18 und 19 ist dargestellt, wie die Welle 64 - drehbar in der Hohlwelle 63 gelagert - über ein Getriebe 83 der Antriebseinheit 80 zur Rotation antreibbar ist. Wird die Welle 64 durch den Antrieb 81 zur Rotation angetrieben so verschwenkt der zweite Hebel 54 und über die Kopplung mittels der Hohlwelle 63 ergibt sich insgesamt eine Verschwenkbewegung der Anzeigeeinheit 20 um die Schwenkachsen 53-6 der Bolzen oder Zapfen 52-3 an den zweiten Enden 53-2 der ersten Hebel 53 und mithin um die dadurch definierte Schwenkachse 61 der Anzeigeeinheit 20. Durch das Langloch 54-3 wird eine Bewegung des Bolzens 52-4 des zweiten Hebels 54 ermöglicht, das Langloch fungiert also als eine Art "Längenausgleich".

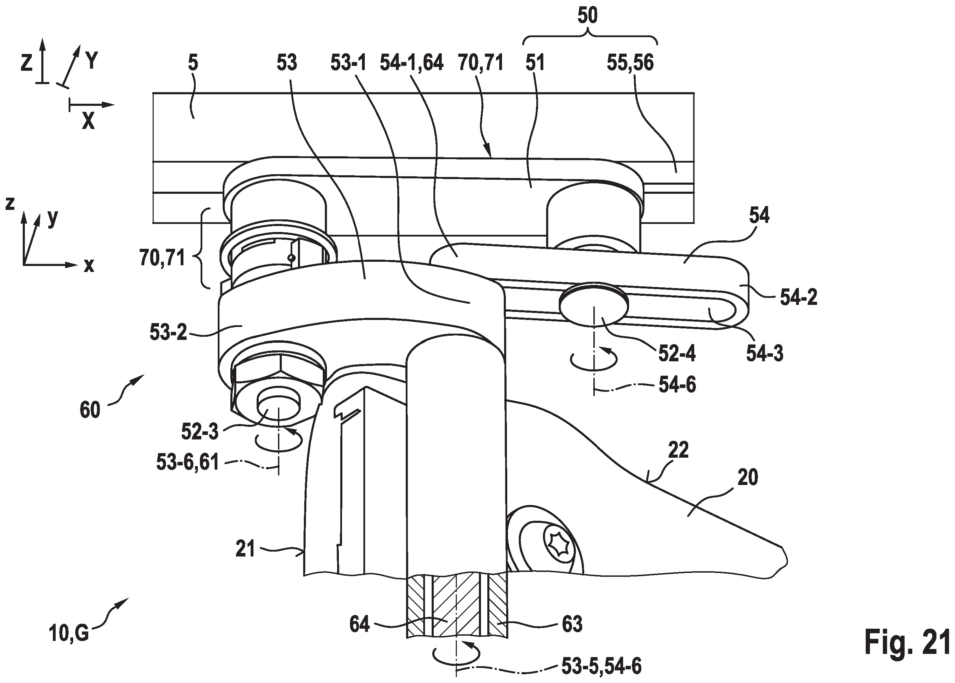

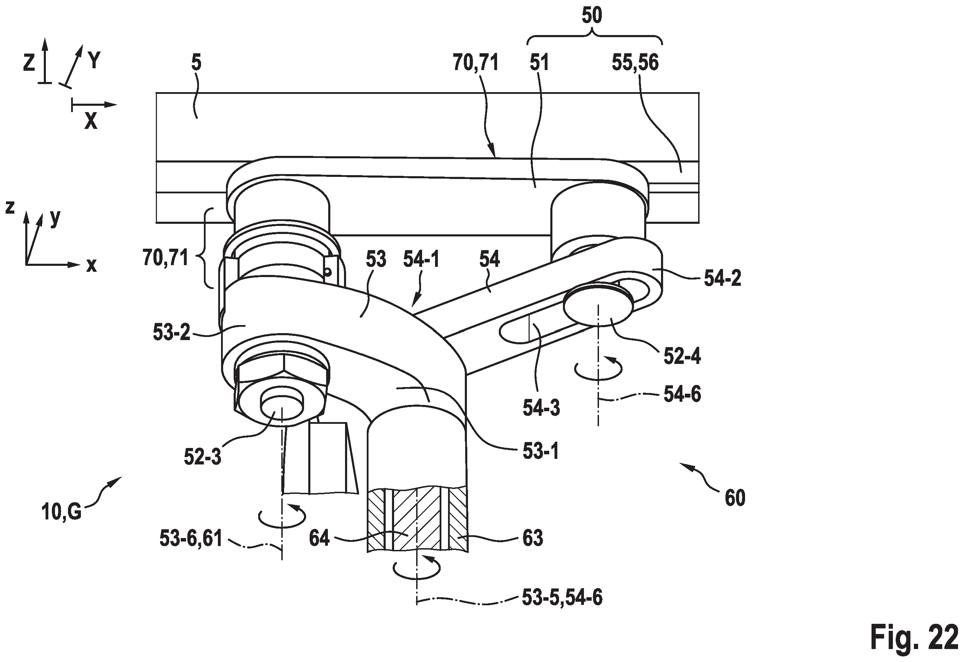

Durch das Verschwenken der zweiten Hebel 54 mit Rotation der Welle 64 nimmt die Anzeigeeinheit 20 die in den Figuren 20 bis 22 gezeigten Stellungen ein, nämlich die in Figur 20 gezeigte Nichtgebrauchsstellung N und die in den Figuren 21 und 22 dargestellte Gebrauchsstellung in G mit verschiedenen Schwenkwinkeln in Relation zum Dachhimmel 5 des Fahrzeugs 1.

Im Havariefall und insbesondere bei Frontalzusammenstößen und bei Auffahrunfällen ist es wichtig, dass die erfindungsgemäße Anzeigeeinrichtung 10 so ausgebildet ist, dass eine in einer Gebrauchsstellung G ausgeschwenkte Anzeigeeinheit 20 umgehend in die Nichtgebrauchsstellung N zurück geschwenkt wird, damit beim Unfall eine Kollision eines Insassen 6 mit der Anzeigeeinheit 20 bei Bewegung eines Insassen 6 auf Grund einer Trägheit vermieden wird.

Dazu werden gemäß einem weiteren Aspekt der vorliegenden Erfindung verschiedene Sicherheitseinrichtungen 70 an der Anzeigeeinrichtung 10 ausgebildet.

Entsprechend zeigen die Figuren 19 bis 22 in schematischer Form Rutschkupplungen 71 als Sicherheitseinrichtung 70 im Bereich des Bolzens 52-3 an den zweiten Enden 53-2 der ersten Hebel 53.

Alternative oder zusätzliche Maßnahmen können im Zusammenhang mit den Bolzen 52-4 an den zweiten Enden 54-2 der zweiten Hebel 54, mit dem ersten Antrieb 81 der Antriebseinheit 80 und/oder im Zusammenhang mit der Führung der Führungselemente 51 in den Führungsschienen 55 ergriffen werden.

Als Ausweichbewegung der Anzeigeeinheit 20 sind grundsätzlich eine rein translatorische Bewegung, eine rein rotatorische Bewegung, also eine Verschwenkbewegung oder eine daraus gebildete Kombination denkbar.

Die Rutschkupplung befindet sich zum Beispiel an oder in der Antriebswelle 64 und trennt den Langlochhebel 54 von der Antriebseinheit 80. Die Antriebseinheit 80, bestehend aus Motor und Getriebestufen, kann auf Grund ihrer Auslegung selbsthemmend sein und würde ein von der Massenträgheit ausgelöstes Einschwenken des Displays 20 verhindern oder zumindest erschweren. Das crashbedingte Einschwenken des Displays 20 bewegt also mit dem Langlochhebel 54 die Antriebswelle 64, aber nicht die Motor-Getriebe-Einheit.

Das Öffnen der Rutschkupplung kann auch nicht nur beim Crash ein Einschwenken des Displays 20 erlauben, sondern auch die Mechanik oder das Display 20 schützen kann, falls ein Kunde gewaltsam manuell versucht, das Display 20 einzuklappen oder zu verdrehen.

Auch bei einem Anrempeln beim Ein- und Aussteigen können temporär hohe Kräfte entstehen.

### Bezugszeichenliste:

- 1: Fahrzeug
- 2: Karosserie
- 3: Innenraum
- 5: Dachhimmel
- 6: Insasse hinten
- 8: Dachrollo, Rollo
- 9: Rolloantrieb
- 9-1: Motor
- 9-2: Antriebsmittel/Bürstenkabel/Helixkabel für Rollo 8

- 10: Anzeigeeinrichtung
- 20: Anzeigeeinheit
- 21: Querkante
- 22: Längskante
- 30: Träger
- 40: Anzeigeelement, Monitor, Bildschirm
- 50: Bewegungseinheit
- 51: Führungselement, Gleiter
- 52-3: Bolzen, Zapfen
- 52-4: Bolzen, Zapfen
- 53: (erster) Hebel, Schwenkhebel
- 53-1: (erstes) Ende des Schwenkhebels 53 (an der Anzeigeeinheit 20)
- 53-2: (zweites) Ende des Schwenkhebels 53 (an einem Führungselement 51)
- 53-5: Schwenkachse am ersten Ende 53-1
- 53-6: Schwenkachse am zweiten Ende 53-2
- 54: (zweiter) Hebel, Koppelhebel, Langlochhebel
- 54-1: (erstes) Ende des Koppelhebels 54 (an der Anzeigeeinheit 20)
- 54-2: (zweites) Ende des Koppelhebels 54 (an einem Führungselement 51)
- 54-3: Langloch
- 54-5: Schwenkachse am ersten Ende 54-1
- 54-6: Schwenkachse am zweiten Ende 54-2
- 55: Führungsschiene
- 56: Führungsbahn
- 60: Schwenkeinheit
- 61: Schwenkachse
- 63: Welle zum Koppelhebel 53 (als Hohlwelle)
- 64: Welle zum Langlochhebel 54
- 70: Sicherheitseinheit
- 71: Rutschkupplung
- 80: Antriebseinheit
- 81: (erster) Antrieb/Motor für Schwenkeinheit 60
- 82: (zweiter) Antrieb/Motor für Translation/Führungselemente 51
- 83: (erstes) Antriebsmittel/Getriebe für Schwenkeinheit 60
- 84: (zweites) Antriebsmittel/Bürstenkabel/Helixkabel für Führungselemente 51

- G: Gebrauchsstellung
- N: Nichtgebrauchsstellung
- x: Raumrichtung
- G X: Längserstreckungsrichtung des Fahrzeugs 1
- y: Raumrichtung
- Y: Querstreckungsrichtung des Fahrzeugs 1
- z: Raumrichtung
- Z: Höhenerstreckungsrichtung des Fahrzeugs 1

## Patentansprüche

1. Anzeigeeinrichtung (10) für den Innenraum (3) eines Fahrzeugs (1), mit
- einer Anzeigeeinheit (20), welche zum optischen Anzeigen von Information eingerichtet ist, und
- einer Schwenkeinheit (60), welche eingerichtet ist, die Anzeigeeinheit (20), insbesondere steuerbar, zwischen einer Nichtgebrauchsstellung (N), parallel zu einem Dachhimmel (5) des Fahrzeugs (1), und einer Gebrauchsstellung (G), insbesondere abgeschwenkt vom Dachhimmel (5) des Fahrzeugs (1), um eine Schwenkachse (61) zu verschwenken und, insbesondere steuerbar, in der Nichtgebrauchsstellung (N) und/oder der Gebrauchsstellung (G) zu haltern,
bei welcher die Schwenkeinheit (60) zwei Paare miteinander gekoppelter erster und zweiter Hebel (53, 54) aufweist,
- deren erste Enden (53-1, 54-1) - für ein Verschwenken der Hebel (43, 54) eines Paares gegeneinander und um deren erste Enden (53-1, 54-1) - um jeweilige Schwenkachsen (53-5, 54-5) schwenkbar miteinander verbunden und mittelbar oder unmittelbar an der Anzeigeeinheit (20) angebracht sind und
- deren zweite Enden (53-2, 54-2) mittelbar oder unmittelbar am Dachhimmel (5) des Fahrzeugs (1) anbringbar oder angebracht sind.

2. Anzeigeeinrichtung (10) nach Anspruch 1, bei welcher ein erstes Ende (53-1) eines jeweiligen ersten Hebels (53) eines Paares als Schwenkhebel drehfest an der Anzeigeeinheit (20) angebracht und mit dieser verbunden ist, insbesondere an oder in einem Kreuzungsbereich einer Querkante (21) und einer Längskante (22) der Anzeigeeinheit (20), welcher in einem im Fahrzeug (1) montierten Zustand der Anzeigeeinrichtung (10) und/oder in der Nichtgebrauchsstellung (N) dem Fond des Fahrzeugs (1) zugewandt ist.

3. Anzeigeeinrichtung (10) nach einem der vorangehenden Ansprüche, bei welcher ein erstes Ende (54-1) eines jeweiligen zweiten Hebels (54) eines Paares als Koppelhebel drehbar an der Anzeigeeinheit (20) und mit dieser und mit dem ersten Ende (53-1) eines zugeordneten ersten Hebels (3 50) des Paares verbunden angebracht ist.

4. Anzeigeeinrichtung (10) nach einem der vorangehenden Ansprüche, bei welcher ein zweites Ende (53-2) eines jeweiligen ersten Hebels (53) eines Paares und/oder ein zweites Ende (54-2) eines jeweiligen zweiten Hebels (54) eines Paares jeweils um eine jeweilige Schwenkachse (53-6, 54-6) schwenkbar ausgebildet sind, insbesondere über einen jeweiligen festen oder drehbar am jeweiligen zweiten Ende (53-2, 54-2) gelagerten Bolzen (52-3, 52-4) oder Zapfen, mit zueinander parallel ausgerichteten Schwenkachsen (53-6, 54-6), parallel zu den Schwenkachsen (53-5, 54-5) der ersten Enden (53-1, 54-1) der Hebel (53, 54), parallel zur Schwenkachse (61) der Anzeigeeinheit (20) und/oder parallel zu den Querkanten (21) der Anzeigeeinheit (20) ausgerichteten Schwenkachsen (53-6, 54-6).

5. Anzeigeeinrichtung (10) nach Anspruch 4, bei welcher die Schwenkachse (53-5) am zweiten Ende (53-2) eines jeweiligen ersten Hebels (53) mit der Schwenkachse (61) der Anzeigeeinheit (20) zusammenfällt.

6. Anzeigeeinrichtung (10) nach einem der vorangehenden Ansprüche, bei welcher ein jeweiliger zweiter Hebel (54) eine Längserstreckungsrichtung sowie ein in der Längserstreckungsrichtung ausgerichtetes Langloch (54-3) zur Aufnahme eines dem zweiten Ende (54-2) des zweiten Hebels (54) zugeordneten Bolzens (52-4) aufweist, wobei der Bolzen (52-4) im Langloch (54-3) entlang der Haupterstreckungsrichtung verschiebbar und insbesondere um eine die dem zweiten Ende (54-2) des zweiten Hebels (54) zugeordnete Schwenkachse (54-6) definierende Bolzenachse, insbesondere senkrecht zur Haupterstreckungsrichtung, drehbar ist.

7. Anzeigeeinrichtung (10) nach einem der vorangehenden Ansprüche, bei welcher
- ein jeweiliger zweiter Hebel (54) mit seinem ersten Ende (54-1) an einer zumindest die Schwenkachse (54-5) zum ersten Ende (54-1) des zweiten Hebels (54) definierende Welle (64) drehfest angebracht ist, insbesondere an einem ihrer Enden und/oder wobei durch die beiden Enden der Welle (64) die beiden zweiten Hebel (54) der beiden Paare von Hebeln miteinander drehfest und in identischer Ausrichtung miteinander verbunden sind,
- ein jeweiliger erster Hebel (53) mit seinem ersten Ende (53-1) an einer zumindest die Schwenkachse (53-5) zum ersten Ende (53-1) des ersten Hebels (53) definierende Hohlwelle (63) drehfest angebracht ist, insbesondere an einem ihrer Enden und/oder wobei durch die beiden Enden der Hohlwelle (63) die beiden ersten Hebel (53) der beiden Paare von Hebeln miteinander und an der Anzeigeeinheit (20) drehfest und in identischer Ausrichtung verbunden, sind und/oder
- zumindest ein Teil der Welle (64) in zumindest einem Teil der Hohlwelle (63) drehbar gelagert ist, so dass ihre Achsen zusammenfallen und die Schwenkachsen (53-5, 54-5) zu den ersten Enden (53-1, 54-1) der ersten und zweiten Hebel (53, 54) der Paare von Hebeln bilden.

8. Anzeigeeinrichtung (10) nach einem der vorangehenden Ansprüche,
(i) welche ausgebildet ist mit jeweils einem - einem Paar von Hebeln zugeordneten - Führungselement (51), wobei an einem jeweiligen Führungselement (51) die zweiten Enden (53-2, 54-2) der Hebel (53, 54) des zugeordneten Paares von Hebeln in einem vorgegebenen Abstand und um die Schwenkachsen (53-6, 54-6) schwenkbar angebracht sind,
(ii) wobei die Führungselemente (51) insbesondere
- gleich oder im Wesentlichen gleich,
- als Gleiter und/oder
- zu einer gleitenden Bewegung in einer jeweiligen Führungsschiene (55) eingerichtet
ausgebildet sind.

9. Anzeigeeinrichtung (10) nach Anspruch 8,
(iii) welche mit jeweils einer einem Führungselement (51) zugeordneten Führungsschiene (55) zur Anbringung am Dachhimmel (5), mit einer Führungsbahn (56), zur Aufnahme des zugeordneten Führungselements (51) und zu dessen Bewegung darin entlang der Führungsbahn (56) ausgebildet ist,
(iv) wobei die Führungsschienen (55)
- als Paar,
- zueinander gleich oder im Wesentlichen gleich,
- linear oder im Wesentlichen linear,
- zueinander parallel ausgerichtet,
- zueinander bündig ausgerichtet, insbesondere in Bezug auf ihre jeweiligen ersten und zweiten Enden (55-1, 55-2),
- im am zugeordneten Fahrzeug (1) montierten Zustand der Anzeigeeinrichtung (10) an einem oder im Bereich eines Dachhimmels (5) angebracht und/oder
- im am zugeordneten Fahrzeug (1) montierten Zustand der Anzeigeeinrichtung (10) parallel zu einer Längserstreckungsrichtung (X) des Fahrzeugs (1) ausgerichtet
ausgebildet sind.

10. Anzeigeeinrichtung (10) nach einem der vorangehenden Ansprüche,
bei welcher die Anzeigeeinheit (20)
- mit im Wesentlichen rechteckiger Gestalt,
- im am zugeordneten Fahrzeug (1) montierten Zustand der Anzeigeeinrichtung (10) mit parallel zu einer Querstreckungsrichtung (Y) des Fahrzeugs (1) ausgerichteten Querkanten (21) und/oder
- im am zugeordneten Fahrzeug (1) montierten Zustand der Anzeigeeinrichtung (10) mit parallel zu einer Längserstreckungsrichtung (X) des zugeordneten Fahrzeugs (1) ausgerichteten Längskanten (22) ausgebildet ist, und/oder
bei welcher die ersten Hebel (53) und/oder die zweiten Hebel (50) jeweils und insbesondere untereinander
- als Paar,
- zueinander gleich oder im Wesentlichen gleich,
- mit gleicher Länge,
- linear oder im Wesentlichen linear,
- zueinander parallel ausgerichtet und/oder
- zueinander bündig ausgerichtet
ausgebildet sind.

11. Anzeigeeinrichtung (10) nach einem der vorangehenden Ansprüche, mit einer Antriebseinheit (80),
- welche zum, insbesondere gesteuerten, Verschwenken der Anzeigeeinheit (20) um die Schwenkachse (61) ausgebildet ist und
- welche dazu insbesondere einen ersten steuerbaren Antrieb (81) und ein mit diesem und mit den zweiten Hebeln (54) mechanisch gekoppeltes oder koppelbares Antriebsmittel (82) aufweist, insbesondere nach Art eines Getriebes, zum Verschwenken der zweiten Hebel (54) und/oder der Welle (64) der zweiten Hebel (54) um deren Schwenkachse (54-5).

12. Anzeigeeinrichtung (10) nach Anspruch 11,
- welche zum Antreiben der Führungselemente (51) für ein gemeinsames, gleiches und/oder translatorische Bewegen der Führungselemente (51) in einer jeweiligen Führungsschiene (55) eingerichtet ist und/oder
- welche mit einem steuerbaren Antrieb (82) und mit einem mit diesem mechanisch gekoppelten oder koppelbaren und den Führungselementen (51) zugeordneten Antriebsmittel (84) ausgebildet ist, wobei das Antriebsmittel (84) insbesondere in Form eines Bürstenkabels oder Helixkabels ausgebildet ist, welches für einen, insbesondere kämmenden, Eingriff durch die Führungselemente (51) zu deren Bewegung eingerichtet ist.

13. Anzeigeeinrichtung (10) nach einem der vorangehenden Ansprüche, bei welcher
- eine Rutschkupplung (71) und/oder Bremse, insbesondere mit Rücklaufsperre, an einem oder in einem Führungselement (51), zwischen einem Führungselement (51) und einer zugeordneten Führungsschiene (55), im Bereich eines Antriebs (81) der zweiten Hebel (54), im Bereich der ersten und/oder zweiten Hebel (53, 54) selbst und/oder mit einer vorbestimmten Haltekraft als Sollhaltekraft derart ausgebildet ist, dass sich beim Überschreiten der Sollhaltekraft ein jeweiliges Führungselement (51) in einer jeweils zugeordneten Führungsschiene (55) der einwirkenden Kraft folgend bewegt und/oder sich eine der einwirkenden Kraft folgende Verschwenkbewegung zurück in die Nichtgebrauchsstellung (N) der Anzeigeeinheit (20) ergibt,
- wobei die Sollhaltekraft insbesondere einen Wert aufweist, welcher in einem Bereich entsprechend einer Beschleunigung im Bereich von etwa 10 g liegt.

14. Fahrzeug (1), welches
- eine Karosserie (2),
- einen durch die Karosserie (2) gebildeten Innenraum (3) mit einem Dachhimmel (5) sowie
- eine am oder im Dachhimmel (5) angebrachte Anzeigeeinrichtung (10) nach einem der vorangehenden Ansprüche aufweist.

15. Fahrzeug (1) nach Anspruch 14, bei welchem
- zwei Führungsschienen (55) der Anzeigeeinrichtung (10) am oder im Dachhimmel (5) derart angebracht sind, dass sie sich mit gleicher Länge bündig und parallel zueinander in einer Längserstreckungsrichtung (X) des Fahrzeugs (1) erstrecken, insbesondere an oder - in Bezug auf eine Querstreckungsrichtung (Y) des Fahrzeugs (1) - in außen gelegenen Bereichen des Dachhimmels (5), und
- zwei Führungselemente (51) der Anzeigeeinrichtung (10) derart in den Führungsschienen (55) aufgenommen sind, dass eine entsprechende erste Querkante (21) der Anzeigeeinheit (20) der Anzeigeeinrichtung (10), an deren Bereich die ersten Führungselemente (51) angebracht sind, parallel zur Querstreckungsrichtung (Y) des Fahrzeugs (1) und in Bezug auf die Längserstreckungsrichtung (X) des Fahrzeugs (1) in Richtung auf eine dem Fond des Fahrzeugs (1) zugewandte Seite zu angeordnet ist.
